# EUROPÄISCHE PATENTANMELDUNG

(11) **EP 0 855 754 A2**
(43) Veröffentlichungstag der Anmeldung: **29.07.1998**
(21) Anmeldenummer: 98100959.0
(22) Anmeldetag: 21.01.1998
(51) Int. Cl.: H01M 8/12, H01M 4/90, C04B 35/01

(54) **Kathodenwerkstoff für eine Hochtemperaturbrennstoffzelle**

(30) Priorität: 27.01.1997 DE 19702619
(71) Anmelder: FORSCHUNGSZENTRUM JÜLICH GMBH, 52425 Jülich (DE)
(72) Erfinder: Stochniol, Guido, Dr., 52062 Aachen (DE); Gupta, Ashok, 52428 Jülich (DE); Naoumidis, Aristides, Dr., 52428 Jülich (DE); Stöver, Detlev, Prof. Dr., 52382 Niederzier (DE)

(57) **Zusammenfassung**

Kathode für eine Hochtemperaturbrennstoffzelle, bestehend aus L_{w}MₓMn_{y}Co_{z}O₃ mit 0,15<x<0,3,0,9<w+x<1 z<0,2, y+z=1,
L=Lanthanide, M= Strontium oder Kalzium.
Die Zusammensetzung La_{0,75}Sr_{0,2}Mn_{0,9}Co_{0,1}O₃ als Kathodenwerkstoff wird bevorzugt.

## Beschreibung

Die Erfindung bezieht sich auf eine Kathode für Hochtemperatur-Brennstoffzellen.

Es ist z. B. aus der Druckschrift 195 43 759 C2 bekannt, in einer Hochtemperatur-Brennstoffzelle Cermets aus Nickel und yttriumstabilisiertem Zirkonoxid (YSZ) als Anoden- sowie YSZ als Elektrolytmaterial einzusetzen.

Der in einer solchen Hochtemperatur-Brennstoffzelle eingesetzte Kathodenwerkstoff muß eine ausreichende elektrische Leitfähigkeit aufweisen. Der thermische Ausdehnungskoeffizient muß an den der Umgebungsmaterialien angepaßt sein, um thermisch bedingte Spannungen und damit einhergehende Zerstörungen zu vermeiden. Eine chemische Verträglichkeit des Werkstoffs mit den Umgebungsmaterialien muß gewährleistet sein. Zielsetzung ist ferner eine hohe elektrochemische Aktivität. Der Werkstoff soll also ein gutes Sauerstoffreduktionsverhalten zeigen.

Aus EP 0 593 281 A2 ist ein Elektrodenwerkstoff bekannt, der aus L_{w}MₓMn_{y}Co_{z}O₃ mit L=Lanthanid, M=Ca oder Sr sowie

w+x=1

besteht. Dieses Material zeigt ein geeignetes thermisches Ausdehnungsverhalten in Hochtemperatur-Brennstoffzellen.

Aus EP 0 593 281 A2 ist nicht bekannt, wie der Elektrodenwerkstoff zu modifizieren ist, um weitere Eigenschaften insbesondere hinsichtlich der elektrochemischen Aktivität zu verbessern.

Aus der Druckschrift EP 568 281 Al sowie aus der Druckschrift EP 510 820 A2 sind Elektroden bekannt, die aus unterstöchiometrischen Perowskiten bestehen.

Gemäß EP 568 281 Al soll in Lanthan/Kalzium - Manganiten das Verhältnis (Lanthan + Kalzium)/Mangan kleiner 1 sein, um zu gewährleisten, daß sich keine Lanthanhydroxyde bilden. Die A - Plätze in der ABO₃-Kristallstruktur können mit dem nicht hydrolisierbaren Cer - mit Lanthan + Kalzium + Cer = mindestens 0,965 und evtl. mit einem Cer - Anteil bis zur Sättigung - belegt werden.

In der Druckschrift EP 510 820 A2 wird ausgeführt, daß in den für Elektroden verwendeten Perowskitmaterialien wie Lanthan - Manganat oder Lanthan - Cobaltat, wobei ein Teil des Kalziums durch Strontium oder Kalzium ersetzt sein kann, ein Defizit an Kalzium, Lanthan oder Strontium vorliegen soll.

Aufgabe der Erfindung ist die Schaffung einer Kathode für eine Hochtemperatur-Brennstoffzelle mit den eingangs genannten Eigenschaften.

Die Aufgabe wird durch eine Kathode mit den Merkmalen des Hauptanspruchs gelöst. Eine vorteilhafte Ausgestaltung ergibt sich aus dem rückbezogenen Anspruch.

Das anspruchsgemäße Kathodenmaterial besteht aus L_{w}MₓMn_{y}Co_{z}O₃ mit 0,15<x<0,3, 0,9<w+x<1, z<0,2,

y+z=1

, L=Lanthanide, M= Strontium oder Kalzium. Es besteht insbesondere aus einem Perowskiten der Zusammensetzung La_{0,75}Sr_{0,2}Mn_{0,9}Co_{0,1}O₃.

Der Kobaltanteil im Werkstoff bewirkt ein gutes Sauerstoffreduktionsverhalten an der Kathode. Der Kobaltanteil im Werkstoff kann bis zu 0,2 betragen. Ein größerer Kobaltanteil hat chemische Verträglichkeitsprobleme zur Folge. Auch wird der Ausdehnungskoeffizient des Materials zu groß im Verhältnis zum Ausdehnungskoeffizienten von YSZ und weist also diesbezügliche Nachteile auf. Der Anteil des Mangans addiert mit dem Anteil des Kobalts beträgt anspruchsgemäß 1.

In Anwesenheit von Kobalt sorgen die Komponenten Lanthan und Strontium für eine gute chemische Verträglichkeit sowie für den gewünschten, an YSZ angepaßten Ausdehnungskoeffizienten.

Lanthan und Strontium liegen im Unterschied zum aus EP 0 593 281 A2 bekannten Werkstoff unterstöchiometrisch vor. Die Summe der Anteile von Lanthan und Strontium unterschreiten 0,9 nicht. Der Strontiumanteil kann von 0,15 bis 0,3 variieren. Anstelle von Strontium kann Kalzium und anstelle von Lanthan können andere Lanthanide eingesetzt werden, ohne daß die vorgenannten Eigenschaften nennenswert eingebüßt werden.

Die erhöhte elektrochemische Aktivität der Kathode aufgrund eines verbesserten Sauerstoffreduktionsverhaltens im Vergleich zum eingangs genannten Stand der Technik ermöglicht, SOFC-Brennstoffzellen bei verhältnismäßig niedrigeren Temperaturen zu betreiben. Üblicherweise liegen die Betriebstemperaturen von Hochtemperatur-Brennstoffzellen bei 900 - 950°C. Die anspruchsgemäße Kathode läßt Hochtemperatur-Brennstoffzellen-Betriebstemperaturen unterhalb von 800°C zu.

Unter einem Kathoden-Elektrolyt-Anoden-Verbund ist eine Elektrolytschicht mit beidseitig angebrachten Elektroden zu verstehen. Die Kathode eines solchen Verbundes weist die anspruchsgemäßen Merkmale auf. Der Elektrolyt besteht gemäß Anspruch 3 aus YSZ, da der thermische Ausdehnungskoeffizient dem des Kathodenwerkstoffs entspricht.

Der Werkstoff weist für die Anwendung in einer Hochtemperatur-Brennstoffzelle eine ausreichende elektrische Leitfähigkeit auf.

Die Erfindung betrifft also einen Co-haltigen Perowskit für den Einsatz als Kathode in Hochtemperatur- Brennstoffzellen (SOFC) für herabgesetzte Arbeitstemperaturen. Insbesondere die Perowskitzusammensetzung La_{0,75}Sr_{0,2}Mn_{0,9}Co_{0,1}O₃ im System ABO₃ zeichnet sich durch eine besonders hohe chemische Verträglichkeit gegenüber dem Elektrolytmaterial YSZ (Y₂O₃-stabilisiertes ZrO₂), durch einen geeigneten thermischen Ausdehnungskoeffizienten, ausreichende elektrische Leitfähigkeit und günstige elektrochemische Eigenschaften bezüglich des Sauerstoffreduktionsvermögens aus.

Die partielle Substitution des Mn durch Co ist zu 5-20% variabel. Der Sr-Anteil auf den La-Gitterplätzen kann zwischen 15-30% variieren. Als Substituent kommt anstelle des Sr auch Ca in Frage. Anstelle des La sind auch andere Lanthaniden zu verwenden. Hervorzuheben für die Eignung als Kathodenmaterial in Verbindung mit YSZ ist die La- Unterstöchiometrie bei der Verwendung von Co. Die Stöchiometrie h der Kationen auf der A-Lage für AₕBO₃ kann im Bereich O,9<h<l variiert werden.

## Patentansprüche

1. Kathode für eine Hochtemperaturbrennstoffzelle, bestehend aus L_{w}MₓMn_{y}Co_{z}O₃ mit 0,15<x<0,3, 0,9<w+x<1 z<0,2,
y+z=1
, L=Lanthanide, M= Strontium oder Kalzium.

2. Kathode nach vorhergehendem Anspruch, bestehend aus La_{0,75}Sr_{0,2}Mn_{0,9}Co_{0,1}O₃.

3. Verwendung einer Kathode mit den Merkmalen nach einem der vorhergehenden Ansprüche in einem Kathoden-Elektrolyt-Anoden-Verbund mit einem aus YSZ bestehenden Elektrolyten.
